# EUROPÄISCHE PATENTSCHRIFT

(11) **EP 1 339 583 B1**
(45) Veröffentlichungstag und Bekanntmachung des Hinweises auf die Patenterteilung: **03.05.2006**
(21) Anmeldenummer: 01985343.1
(22) Anmeldetag: 28.11.2001
(51) Int. Cl.: B60T 13/52, G01L 9/00, B60T 13/72, G01L 19/00

(54) **SENSORANORDNUNG FUR EINEN UNTERDRUCK-BREMSKRAFTVERSTÄRKER**
SENSOR SYSTEM FOR A VACUUM BRAKE BOOSTER
SYSTEME DE CAPTEUR POUR UN SERVOFREIN A DEPRESSION

(30) Priorität: 08.12.2000 DE 10061153
(43) Veröffentlichungstag der Anmeldung: 03.09.2003
(73) Patentinhaber: Lucas Automotive GmbH, 56070 Koblenz (DE)
(72) Erfinder: BORSCH, Stefan, 56333 Winningen (DE)
(74) Vertreter: Beyer, Andreas
(86) Internationale Anmeldenummer: PCT/EP2001/013914
(87) Internationale Veröffentlichungsnummer: WO 2002/046011

(56) Entgegenhaltungen:
- DE-A- 4 436 297
- DE-C- 19 729 158

## Beschreibung

Die Erfindung betrifft eine Sensoranordnung für einen Unterdruck-Bremskraftverstärker zur Ermittlung der in einem Bremskraftverstärker herrschenden Druckverhältnisse und einen mit einer solchen Sensoranordnung ausgerüsteten Unterdruck-Bremskraftverstärker.

Informationen über die in einem Unterdruck-Bremskraftverstärker vorherrschenden Druckverhältnisse können auf verschiedene Art und Weise genutzt werden. Beispielsweise ermöglicht die Erfassung der Druckzustände im Bremskraftverstärker die Detektierung des Aussteuerzustandes des Bremskraftverstärkers, d.h. des Zustandes, ab dem der Bremskraftverstärker nicht mehr in der Lage ist, eine weitere Druckerhöhung zu unterstützen. Darüber hinaus kann die Sensierung der Höhe des Unterdrucks in einer Unterdruckkammer des Bremskraftverstärkers beispielsweise zur Steuerung einer den Unterdruck erzeugenden Vakuumpumpe dienen.

Besonders vorteilhaft ist die Erfassung der Druckzustände bei einem mit einer elektromagnetischen Betätigungseinheit ausgestatteten Bremskraftverstärker. Eine solche elektromagnetische Betätigungseinheit ermöglicht es, zusätzlich oder alternativ zur fußkraftproportionalen Betätigung durch den Fahrer, durch Ansteuern des Bremskraftverstärkers die Fahrzeugbremsanlage zu betätigen. Beispielsweise bietet die erwähnte elektromagnetische Betätigungseinheit in einer kritischen Fahrsituation, z.B. bei einer Notbremsung die Möglichkeit, den Bremskraftverstärker unabhängig von der Fußbetätigungskraft des Fahrers voll auszusteuern und so die maximal mögliche Bremskraftunterstützung zur Verfügung zu stellen (sogenannte Bremsassistentfunktion). Die Druckaufbaugeschwindigkeit in der Arbeitskammer eines Bremskraftverstärkers kann dazu herangezogen werden, zu erkennen, wann eine Bremsung eine Notbremsung ist. Auch bei der Durchführung vollständig automatisch ablaufender Bremsungen, beispielsweise im Zusammenwirken mit einem Abstandsregelungssystem, ist die Kenntnis der im Bremskraftverstärker vorherrschenden Druckverhältnisse von Interesse.

Zur Messung des Druckes in einem Unterdruck-Bremskraftverstärker werden üblicherweise Drucksensoren eingesetzt, deren Signale von einem in der Regel elektronischen Steuergerät verarbeitet werden, um die elektromagnetische Betätigungseinheit in gewünschter Weise zu steuern.

Bei einem aus der DE 44 36 297 A1 die den nächstliegenden Stand der Technik bildet, bekannten Unterdruck-Bremskraftverstärker ist ein Drucksensor zur Erfassung des in einer Arbeitskammer vorherrschenden Druckes starr mit einer zwischen einer Unterdruckkammer und einer Arbeitskammer angeordneten beweglichen Wand verbunden. Eine Messung des in der Unterdruckkammer vorliegenden Druckes erfolgt durch einen zweiten Drucksensor, der entweder außerhalb eines Bremskraftverstärkergehäuses oder innerhalb der Unterdruckkammer angeordnet ist.

Aus der US 4 633 757 ist ein Unterdruck-Bremskraftverstärker mit einem in einer Arbeitskammer und einem in einer Unterdruckkammer angeordneten Drucksensor bekannt, wobei die Drucksensoren jeweils an einer Innenwand des Bremskraftverstärkergehäuses befestigt sind. Diese bekannten Anordnungen haben den Nachteil, daß die Montage und Überprüfung sowie ein ggf. erforderlicher Austausch des Drucksensors große Schwierigkeiten bereitet und mit erheblichem Aufwand verbunden sind.

In der DE 197 29 158 C1 ist ein Unterdruck-Bremskraftverstärker mit einem Drucksensor beschrieben, der in einem Gehäuse angeordnet ist, das von außen an ein Bremskraftverstärkergehäuse angeflanscht ist. Der Drucksensor ist durch Luftführungskanäle, die sich von dem Gehäuse der Sensoranordnung in das Bremskraftverstärkergehäuse erstrecken, mit mindestens einer Arbeitskammer und mindestens einer Unterdruckkammer verbunden. Durch die Anordnung des Drucksensors außerhalb des Bremskraftverstärkergehäuses entsteht jedoch ein erhöhter Raumbedarf.

Der Erfindung liegt die Aufgabe zugrunde, eine Sensoranordnung zur Erfassung der in einem Unterdruck-Bremskraftverstärker vorherrschenden Druckverhältnisse bereitzustellen, deren konstruktiver Aufbau möglichst einfach und platzsparend, gleichzeitig jedoch montage- und wartungsfreundlich ist.

Diese Aufgabe ist erfindungsgemäß mit einer Sensoranordnung gelöst, die die im Anspruch 1 angegebenen Merkmale aufweist. Die erfindungsgemäße Sensoranordnung zeichnet sich dadurch aus, daß zumindest ein Drucksensor platzsparend in einem ersten Gehäuseabschnitt angeordnet ist, der im montierten Zustand der Sensoranordnung durch eine in einem Bremskraftverstärkergehäuse ausgebildete Bohrung in das Innere des Bremskraftverstärkergehäuses hineinragt. Eine erste Trennwand dichtet das Bremskraftverstärkergehäuse im montierten Zustand der Sensoranordnung gegen die Umgebungsatmosphäre ab. Der erste Gehäuseabschnitt ist mittels einer zweiten Trennwand in eine erste Kammer und eine zweite Kammer unterteilt und erstreckt sich soweit in das Bremskraftverstärkergehäuse hinein, daß die erste Kammer über eine erste Druckeinlaßöffnung unmittelbar mit der Unterdruckkammer des Bremskraftverstärkers und die zweite Kammer über eine zweite Druckeinlaßöffnung unmittelbar mit der Arbeitskammer des Bremskraftverstärkers in Verbindung steht. Das Anbringen spezieller Halterungen für den zumindest einen Drucksensor oder eine besondere Ausgestaltung des Bremskraftverstärkergehäuses ist nicht erforderlich, so daß eine rationelle Serienfertigung von unterschiedlichen Bremskraftverstärkern mit dem gleichen Gehäusetyp möglich ist. Änderungen an der Verstärkergeometrie sind ebenfalls nicht erforderlich. Weiterhin weist die erfindungsgemäße Lösung den Vorteil auf, daß der zumindest eine Drucksensor im Inneren des Bremskraftverstärkergehäuses angeordnet ist und über die Druckeinlaßöffnungen direkt mit der Arbeitskammer und der Unterdruckkammer des Bremskraftverstärkers verbunden ist, woraus eine erhöhte Meßgenauigkeit sowie eine geringere Fehleranfälligkeit resultiert.

In einer bevorzugten Ausführungsform der erfindungsgemäßen Sensoranordnung ist in jeder der beiden Kammern des ersten Gehäuseabschnitts ein Drucksensor angeordnet, von denen einer den Druck in der Unterdruckkammer und der andere den Druck in der Arbeitskammer erfaßt.

Vorzugsweise sind die Drucksensoren Absolutdrucksensoren, die den absoluten in der Unterdruckkammer und Arbeitskammer herrschenden Druck sensieren.

Gemäß einer Ausführungsform der erfindungsgemäßen Sensoranordnung sind die erste Trennwand und die zweite Trennwand Teil eines in dem ersten Gehäuseabschnitt angeordneten, einstückig ausgebildeten Gehäuseeinsatzes. Eine derartige Ausgestaltung ermöglicht eine wirtschaftliche Herstellung der Sensoranordnung, da der Gehäuseeinsatz kostengünstig, z.B. als Kunststoffspritzgußteil, hergestellt werden kann.

Vorzugsweise ist der erste Gehäuseabschnitt hohlzylindrisch ausgebildet. Die erste Trennwand und die zweite Trennwand haben vorteilhafterweise einen Durchmesser, der kleiner ist als der Innendurchmesser des ersten Gehäuseabschnitts, und zwischen jeder Trennwand und einer Innenwand des ersten Gehäuseabschnitts ist ein Dichtelement, insbesondere ein O-Ring, angeordnet. Die Abdichtung des ersten Gehäuseabschnitts gegen die Umgebungsatmosphäre sowie die dichtende Trennung der beiden Kammern erfolgt so auf eine kostengünstige Art und Weise, da handelsübliche O-Ringe verwendet werden können.

Gemäß einer weiteren Ausführungsform der erfindungsgemäßen Sensoranordnung ist nur in einer der beiden Kammern des ersten Gehäuseabschnitts ein als Differenzdrucksensor ausgebildeter Drucksensor angeordnet. Dieser Differenzdrucksensor, der der einzige Drucksensor dieser Ausführungsform ist, ist über eine dritte Druckeinlaßöffnung mit der ersten Kammer und über eine vierte Druckeinlaßöffnung mit der zweiten Kammer des ersten Gehäuseabschnitts verbunden. Eine derart ausgestaltete Sensoranordnung ist, angeschlossen an ein Steuergerät, dazu in der Lage, mittels des Differenzdrucksensors, die jeweils an der beweglichen Wand des Bremskraftverstärkers wirkende Druckdifferenz festzustellen und daraus die aktuell wirkende Bremskraftverstärkung zu bestimmen.

Gemäß einer bevorzugten Ausgestaltung der erfindungsgemäßen Sensoranordnung wird die zweite Trennwand von einem äußeren Abschnitt des Differenzdrucksensors gebildet, der abdichtend mit einer Innenwand des ersten Gehäuseabschnitts verbunden ist. Eine derartige Ausgestaltung ist besonders einfach und kostengünstig, da die zweite Trennwand nicht als separates Bauteil ausgeführt werden muß.

Vorzugsweise ist die erste Trennwand abdichtend mit einer Innenwand eines außerhalb des Bremskraftverstärkergehäuses angeordneten zweiten Gehäuseabschnitts verbunden. Diese Anordnung erlaubt es, die Sensoranordnung in dem Gehäuse vorzumontieren und anschließend in einem Arbeitsgang in die am Bremskraftverstärker ausgebildete Bohrung einzupassen.

Gemäß einer vorteilhaften Ausgestaltung der erfindungsgemäßen Sensoranordnung erfolgt der elektrische Anschluß des zumindest einen Drucksensor durch zumindest eine abgedichtet durch die erste Trennwand oder die Trennwände geführte Verbindungsleitung. Diese zumindest eine Verbindungsleitung kann außerhalb des Bremskraftverstärkergehäuses zu einem beliebigen Anschlußpunkt, beispielsweise zu einem elektronischen Steuergerät, geführt werden.

Gemäß einer weiteren Ausführungsform der erfindungsgemäßen Sensoranordnung besteht zumindest ein Trägerelement für den zumindest einen Drucksensor aus elektrisch leitendem Material und ist abgedichtet durch die erste Trennwand oder die Trennwände geführt. Bei dieser Anordnung kann auf die zuvor erwähnte elektrisch Verbindungsleitung verzichtet werden.

Vorzugsweise ist die zumindest eine Verbindungsleitung zu einem Anschlußstecker geführt, der außerhalb des Bremskraftverstärkergehäuses angeordnet ist. Der außerhalb des Bremskraftverstärkergehäuses angeordnete Anschlußstecker kann auch unmittelbar mit dem aus elektrisch leitendem Material bestehenden Trägerelement verbunden sein. Durch eine solche Ausgestaltung kann der Drucksensor im Bremskraftverstärkergehäuse vormontiert werden, während seine elektrische Verbindung, beispielsweise mit einem elektronischen Steuergerät, beim Einbau des Bremskraftverstärkers durch einfaches Anschließen des Anschlußsteckers hergestellt werden kann.

Gemäß einer weiteren Ausführungsform der erfindungsgemäßen Sensoranordnung ist die erste Trennwand Teil eines Gehäuses eines elektronischen Steuergerätes, in dem eine Elektronikplatine angeordnet ist, die mit dem zumindest einen Drucksensor elektrisch leitend verbunden ist. Die elektrische Verbindung der Elektronikplatine mit dem zumindest einen Drucksensor kann entweder über die zumindest eine Verbindungsleitung oder das zumindest eine, aus elektrisch leitendem Material bestehende Trägerelement erfolgen. Diese Ausführungsformen der vorliegenden Erfindung zeichnen sich dadurch aus, daß der zumindest eine Drucksensor mit dem elektronischen Steuergerät zu einer Baugruppe vormontiert werden kann. Die direkte Anflanschung des Steuergeräts am Bremskraftverstärkergehäuse ist montagefreundlich und platzsparend. Darüber hinaus ermöglicht sie kurze und damit störunanfälligere Verbindungswege der elektrischen Leitungen.

Ein mit der erfindungsgemäßen Sensoranordnung ausgestatteter Bremskraftverstärker ist wirtschaftlich herstellbar, da die Sensoranordnung ohne besondere Änderungen des Bremskraftverstärkergehäuses oder der Bremskraftverstärkergeometrie auf montagefreundliche Weise im Inneren des Bremskraftverstärkergehäuses plaziert werden kann. Die Anordnung des zumindest einen Drucksensors im Inneren Bremskraftverstärkergehäuses ist nicht nur besonders platzsparend, sondern ermöglicht auch eine besonders zuverlässige Erfassung der im Bremskraftverstärker vorherrschenden Druckverhältnisse.

Mehrere Ausführungsbeispiele einer erfindungsgemäßen Sensoranordnung werden im folgenden anhand der beigefügten schematischen Figuren näher erläutert. Es zeigt:
- Fig. 1: eine geschnitten wiedergegebene Seitenansicht eines ersten Ausführungsbeispiels der erfindungsgemäßen Sensoranordnung im montierten Zustand,
- Fig. 2: eine geschnitten wiedergegebene Seitenansicht eines weiteren Ausführungsbeispiels der erfindungsgemäßen Sensoranordnung im montierten Zustand.

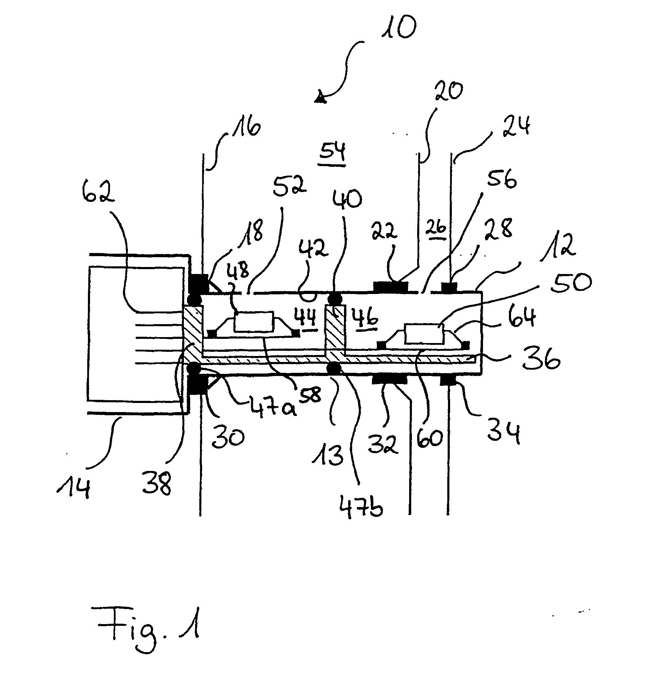

Die in Figur 1 dargestellte Sensoranordnung 10 weist ein einstückiges Gehäuse 12 mit einem hohlzylindrischen ersten Gehäuseabschnitt 13 und einem sich daran anschließenden zweiten Gehäuseabschnitt 14 auf. Im montierten Zustand der Sensoranordnung 10 ist der zweite Gehäuseabschnitt 14 außerhalb eines hier nicht vollständig dargestellten Bremskraftverstärkergehäuses angeordnet, während der erste Gehäuseabschnitt 13 durch eine erste, in einer Gehäusewand 16 eines Unterdruck-Bremskraftverstärkers ausgebildete Bohrung 18, eine zweite, in einer beweglichen Wand 20 ausgebildete Bohrung 22 und eine dritte, in einer Begrenzungswand 24 einer Arbeitskammer 26 ausgebildete Bohrung 28 in das Innere des Bremskraftverstärkergehäuses ragt. Zur druckdichten Abdichtung sind im Bereich der Bohrungen 18, 22, 28 jeweils Dichtelemente 30, 32, 34 eingesetzt, durch die der erste Gehäuseabschnitt 13 geführt ist.

Im Inneren des ersten Gehäuseabschnittes 13 ist ein Gehäuseeinsatz 36 angeordnet, der als einstückiges Bauteil mit einer ersten Trennwand 38 und einer zweiten Trennwand 40 ausgeführt ist, beispielsweise als Kunststoffspritzgußteil. Zur Abdichtung gegen die Umgebungsatmosphäre ist die erste Trennwand 38 im Bereich der ersten Bohrung 18 dichtend mit einer Innenwand 42 des ersten Gehäuseabschnitts 13 verbunden. Die weitere Trennwand 40 ist ebenfalls dichtend mit der Innenwand 42 des ersten Gehäuseabschnitts 13 verbunden und unterteilt den ersten Gehäuseabschnitt 13 in eine erste Kammer 44 und eine zweite Kammer 46. Die erste Trennwand 38 und die zweite Trennwand 40 weisen einen Durchmesser auf, der kleiner ist als der Innendurchmesser des hohlzylindrischen ersten Gehäuseabschnitts 13, so daß für die dichtende Verbindung zwischen jeder Trennwand 38, 40 und der Innenwand 42 des ersten Gehäuseabschnitts 13 Dichtelemente 47a, 47b angeordnet sind. Die Maße der Trennwände 38, 40 und des ersten Gehäuseabschnitts 13 sind so gewählt, daß als Dichtelemente 47a, 47b handelsübliche O-Ringe verwendet werden können.

In jeder der beiden Kammern 44, 46 ist ein als Absolutdrucksensor ausgeführter Drucksensor 48, 50 angeordnet. Die erste Kammer 44 steht über eine erste Druckeinlaßöffnung 52 mit einer Unterdruckkammer 54 des Unterdruck-Bremskraftverstärkers in Verbindung, so daß der in der ersten Kammer 44 plazierte Drucksensor 48 den in der Unterdruckkammer 54 vorherrschenden Druck erfaßt. Die zweite Kammer 46 steht über eine zweite Druckeinlaßöffnung 56 mit der Arbeitskammer 26 des Unterdruck-Bremskraftverstärkers in Verbindung, so daß der in der zweiten Kammer 46 plazierte Drucksensor 50 den in der Arbeitskammer 26 vorherrschenden Druck erfaßt.

Der in der ersten Kammer 44 plazierte Drucksensor 48 ist auf einem Trägerelement 58 angeordnet, das aus einem elektrisch leitendem Material besteht und abgedichtet durch die erste Trennwand 38 hindurch in den zweiten Abschnitt 14 des Gehäuses 12 geführt ist. Der in der zweiten Kammer 46 plazierte Drucksensor 50 ist auf einem Trägerelement 60 angeordnet, das ebenfalls aus einem elektrisch leitendem Material besteht. Das Trägerelement 60 ist abgedichtet durch die zweite Trennwand 40 und die erste Trennwand 38 hindurch in den zweiten Abschnitt 14 des Gehäuses 12 geführt. Im zweiten Abschnitt 14 des Gehäuses 12 sind die Trägerelemente 58, 60 mit einem elektrischen Anschlußstecker 62 verbunden.

Die Drucksensoren 48, 50 weisen auf zwei gegenüberliegenden Seiten elektrische Anschlüsse 64 auf. Die elektrischen Anschlüsse 64 der Drucksensoren 48, 50 sind mit dem jeweiligen Trägerelement 58, 60 verlötet oder verschweißt, so daß die Drucksensoren 48, 50 auf dem jeweiligen Trägerelement 58, 60 mechanisch verankert sind.

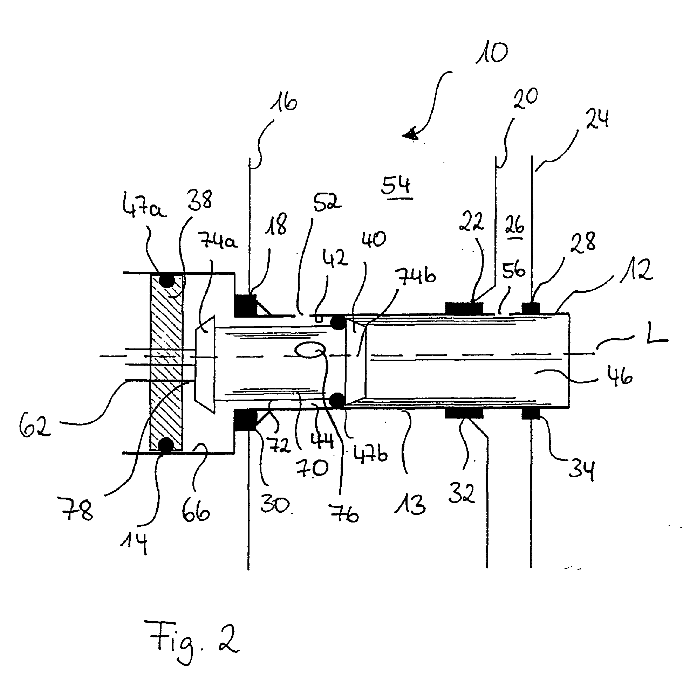

In der Figur 2 ist ein weiteres Ausführungsbeispiel der erfindungsgemäßen Sensoranordnung 10 im montierten Zustand wiedergegeben. Zur Abdichtung gegen die Umgebungsatmosphäre ist die erste Trennwand 38 dichtend mit einer Innenwand 66 des zweiten Gehäuseabschnitts 14 verbunden. Die erste Trennwand 38 weist einen Durchmesser auf, der kleiner ist als der Innendurchmesser des hohlzylindrisch ausgebildeten zweiten Gehäuseabschnitts 14, weshalb zur Abdichtung zwischen der Trennwand 38 und der Innenwand 66 des zweiten Gehäuseabschnitts 14 das Dichtelement 47a angeordnet ist.

In der ersten Kammer 44 ist ein als Differenzdrucksensor ausgebildeter Drucksensor 70 angeordnet. Der Drucksensor 70 weist einen zylindrischen mittleren Abschnitt 72 auf, an dessen beiden Stirnseiten sich jeweils äußere Abschnitte 74a, 74b anschließen. Der Durchmesser der äußeren Abschnitte 74a, 74b ist in einem zum mittleren Abschnitt 72 benachbarten Bereich größer als der Durchmesser des mittleren Abschnitts 72. Der in das Innere des Bremskraftverstärkergehäuses gerichtete äußere Abschnitt 74b des Drucksensors 70 bildet im Zusammenwirken mit dem Dichtelement 47b die zweite Trennwand 40. Das Dichtelement 47b ist in einem dem äußeren Abschnitt 74b benachbarten Bereich des mittleren Abschnitts 72 des Drucksensors 70 zwischen letzteren und der Innenwand 42 des ersten Gehäuseabschnitts 13 angeordnet, so daß der erweiterte Durchmesser des äußeren Abschnitts 74b im Zusammenwirken mit dem Dichtelement 47b die axiale Verschiebbarkeit des Drucksensors 70 entlang einer Längsachse L begrenzt.

Eine am Drucksensor 70 ausgebildete dritte Druckeinlaßöffnung 76 verbindet den Drucksensor 70 mit der ersten Kammer 44, in der ein Druck vorherrscht, der dem Druck in der Unterdruckkammer 54 entspricht. Eine in der Figur nicht dargestellte, auf der gegenüberliegenden Seite des Drucksensors 70 ausgebildete vierte Druckeinlaßöffnung verbindet den Drucksensor 70 mit der zweiten Kammer 46, in der ein Druck vorherrscht, der dem Druck in der Arbeitskammer 26 entspricht. Auf diese Weise kann der Differenzdrucksenor 70 die zwischen Unterdruckkammer 54 und Arbeitskammer 26 bestehende Druckdifferenz erfassen.

Der elektrische Anschluß des Drucksensors 70 erfolgt durch Verbindungsleitungen 78, die abgedichtet durch die erste Trennwand 38 geführt und mit dem elektrischen Anschlußstecker 62 verbunden sind.

Gemäß einem weiteren, hier nicht dargestellten Ausführungsbeispiel ist ein elektronisches Steuergerät mittels eines Dichtelements abdichtend unmittelbar an die Gehäusewand 16 des Bremskraftverstärkers angeflanscht. Die erste Trennwand 38, die den Innenraum des Bremskraftverstärkergehäuses von der Umgebungsatmosphäre trennt, wird von einem Bereich eines Steuergerätegehäuses gebildet. Das Steuergerät beinhaltet eine Elektronikplatine, die über die Verbindungsleitungen 78 oder die elektrisch leitenden Trägerelemente 58, 60 direkt mit den elektrischen Anschlüssen 64 der Absolutdrucksensoren 48, 50 oder dem Differenzdrucksensor 70 elektrisch leitend verbunden ist.

## Patentansprüche

1. Sensoranordnung ( 20) für einen Unterdruckbremskraftverstärker, der ein Bremskraftverstärkergehäuse mit zumindest einer Unterdruckkammer (54) und einer davon durch eine bewegliche Wand (20) getrennten Arbeitskammer (24), die wahlweise mit Unterdruck oder wenigstens Atmosphärendruck verbindbar ist, sowie eine im Bremskraftverstärkergehäuse angeordnete Bohrung (18) aufweist, wobei die Sensoranordnung (10) aufweist:
- eine erste Trennwand (38), die im montierten Zustand der Sensoranordnung (10) das Bremskraftverstärkergehäuse gegen die Umgebungsatmosphäre abdichtet,
- ein Gehäuse (12) mit einem in das Bremskraftverstärkergehäuse hineinragenden ersten Gehäuseabschnitt (13), der von einer zweiten Trennwand (40) in eine erste Kammer (44) und eine zweite Kammer (46) unterteilt wird, wobei sich der erste Gehäuseabschnitt (13) im montierten Zustand der Sensoranordnung (10) so weit in das Bremskraftverstärkergehäuse erstreckt, daß die erste Kammer (44) über eine erste Druckeinlaßöffnung (52) unmittelbar mit der Unterdruckkammer (54) des Bremskraftverstärkers und die zweite Kammer (46) über eine zweite Druckeinlaßöffnung (56) unmittelbar mit der Arbeitskammer (26) des Bremskraftverstärkers in Verbindung steht, und
- mindestens einen in dem ersten Gehäuseabschnitt (13) angeordneten Drucksensor (48, 50, 70).

2. Sensoranordnung nach Anspruch 1,
**dadurch gekennzeichnet, daß** in jeder der beiden Kammern (44, 46) des ersten Gehäuseabschnitts (13) ein Drucksensor (48, 50) angeordnet ist.

3. Sensoranordnung nach Anspruch 2,
**dadurch gekennzeichnet, daß** die Drucksensoren (48, 50) Absolutdrucksensoren sind.

4. Sensoranordnung nach einem der vorhergehenden Ansprüche,
**dadurch gekennzeichnet, daß** die erste Trennwand (38) und die zweite Trennwand (40) Teil eines in dem ersten Gehäuseabschnitt (13) angeordneten, einstückig ausgebildeten Gehäuseeinsatzes (36) sind.

5. Sensoranordnung nach einem der vorhergehenden Ansprüche,
**dadurch gekennzeichnet, daß** der erste Gehäuseabschnitt (13) hohlzylindrisch ausgebildet ist.

6. Sensoranordnung nach Anspruch 5,
**dadurch gekennzeichnet, daß** die erste Trennwand (38) und die zweite Trennwand (40) einen Durchmesser aufweisen, der kleiner ist als der Innendurchmesser des ersten Gehäuseabschnitts (13), und daß zwischen jeder Trennwand (38, 40) und einer Innenwand (42) des ersten Gehäuseabschnitts (13) ein Dichtelement (47a, 47b), insbesondere ein O-Ring, angeordnet ist.

7. Sensoranordnung nach Anspruch 1,
**dadurch gekennzeichnet, daß** nur in einer der beiden Kammern (44, 46) des ersten Gehäuseabschnitts (13) ein als Differenzdrucksensor ausgebildeter Drucksensor (70) angeordnet ist, der über eine dritte Druckeinlaßöffnung (76) mit der ersten Kammer (44) des ersten Gehäuseabschnitts (13) und über eine vierte Druckeinlaßöffnung (78) mit der zweiten Kammer (46) des ersten Gehäuseabschnitts (13) verbunden ist.

8. Sensoranordnung nach Anspruch 7,
**dadurch gekennzeichnet, daß** die zweite Trennwand (40) von einem äußeren Abschnitt (74b) des Differenzdrucksensors (70) gebildet wird, der abdichtend mit einer Innenwand (42) des ersten Gehäuseabschnitts (13) verbunden ist.

9. Sensoranordnung nach einem der Ansprüche 1 bis 3 oder 5 bis 8,
**dadurch gekennzeichnet, daß** die erste Trennwand (38) abdichtend mit einer Innenwand (66) eines außerhalb des Bremskraftverstärkergehäuses angeordneten zweiten Gehäuseabschnitts (14) verbunden ist.

10. Sensoranordnung nach einem der vorhergehenden Ansprüche,
**dadurch gekennzeichnet, daß** der elektrische Anschluß des zumindest einen Drucksensors (48, 50, 70) durch zumindest eine abgedichtet durch die erste Trennwand (38) oder die Trennwände (38, 40) geführte Verbindungsleitung (78) erfolgt.

11. Sensoranordnung nach einem der Ansprüche 1 bis 9,
**dadurch gekennzeichnet, daß** zumindest ein Trägerelement (58, 60) für den zumindest einen Drucksensor (48, 50, 70) aus elektrisch leitendem Material besteht und abgedichtet durch die erste Trennwand (38) oder die Trennwände (38, 40) geführt ist.

12. Sensoranordnung nach Anspruch 10,
**dadurch gekennzeichnet, daß** die zumindest eine Verbindungsleitung (78) zu einem Anschlußstecker (62) geführt ist, der außerhalb des Bremskraftverstärkergehäuses angeordnet ist.

13. Sensoranordnung nach Anspruch 11,
**dadurch gekennzeichnet, daß** das zumindest eine Trägerelement (58, 60) zu einem Anschlußstecker (62) geführt ist, der außerhalb des Bremskraftverstärkergehäuses angeordnet ist.

14. Sensoranordnung nach einem der Ansprüche 1 bis 3, 5, 7 oder 9 bis 13,
**dadurch gekennzeichnet, daß** die erste Trennwand (38) Teil eines Gehäuses eines elektronischen Steuergerätes ist, in dem eine Elektronikplatine angeordnet ist, die mit dem zumindest einen Drucksensor (48, 50, 70) elektrisch leitend verbunden ist.

15. Unterdruckbremskraftverstärker mit einem Bremskraftverstärkergehäuse, in dem zumindest eine Unterdruckkammer (54) und eine davon durch eine bewegliche Wand (20) getrennte Arbeitskammer (26), die wahlweise mit Unterdruck oder wenigstens Atmosphärendruck verbindbar ist, angeordnet ist, **gekennzeichnet durch** eine Sensoranordnung (10) gemäß einem der Ansprüche 1 bis 14.

## Claims

1. Sensor arrangement (10) for a vacuum brake booster comprising a brake booster housing with at least one vacuum chamber (54) and one working chamber (26), which is separated from the latter by a moveable wall (20) and is connectable either to vacuum or at least atmospheric pressure, as well as a bore (18) disposed in the brake booster housing, the sensor arrangement (10) comprising:
- a first partition (38), which seals the brake booster housing off from the ambient atmosphere when the sensor arrangement (10) is in the assembled state;
- a housing (12) with a first housing portion (13) which projects into the brake booster housing and is divided by a second partition (40) into a first chamber (44) and a second chamber (46), wherein, when the sensor arrangement (10) is assembled, the first housing portion (13) extends into the brake booster housing to an extent such that the first chamber (44) is directly connected to the vacuum chamber (54) of the brake booster via a first pressure inlet opening (52) and the second chamber (46) is directly connected to the working chamber (26) of the brake booster via a second pressure inlet opening (56), and
- at least one pressure sensor (48, 50, 70) disposed in the first housing portion (13).

2. Sensor arrangement according to Claim 1,
**characterized in that** a pressure sensor (48, 50) is disposed in each of the two chambers (44, 46) of the first housing portion (13).

3. Sensor arrangement according to Claim 2,
**characterized in that** the pressure sensors (48, 50) are absolute pressure sensors.

4. Sensor arrangement according to one of the preceding Claims,
**characterized in that** the first partition (38) and the second partition (40) constitute part of a one-piece housing insert (36) disposed in the first housing portion (13).

5. Sensor arrangement according to one of the preceding Claims,
**characterized in that** the first housing portion (13) is of a hollow cylindrical form.

6. Sensor arrangement according to Claim 5,
**characterized in that** the first partition (38) and the second partition (40) are of a diameter which is smaller than the inside diameter of the first housing portion (13), and a sealing element (47a, 47b), in particular an O-ring, is disposed between each partition (38, 40) and an inner wall (42) of the first housing portion (13).

7. Sensor arrangement according to Claim 1,
**characterized in that** a pressure sensor (70) formed as a differential pressure sensor is disposed in only one of the two chambers (44, 46) of the first housing portion (13) and is connected to the first chamber (44) of the first housing portion (13) via a third pressure inlet opening (76) and to the second chamber (46) of the first housing portion (13) via a fourth pressure inlet opening (78).

8. Sensor arrangement according to Claim 7,
**characterized in that** the second partition (40) is formed by an outer portion (74b) of the differential pressure sensor (70) which is sealingly connected to an inner wall (42) of the first housing portion (13).

9. Sensor arrangement according to one of Claims 1 to 3 or 5 to 8,
**characterized in that** the first partition (38) is sealingly connected to an inner wall (66) of a second housing portion (14) disposed outside of the brake booster housing.

10. Sensor arrangement according to one of the preceding Claims,
**characterized in that** the, at least one, pressure sensor (48, 50, 70) is electrically connected via at least one connecting line (78) which is passed through the first partition (38) or the partitions (38, 40) in sealed fashion.

11. Sensor arrangement according to one of Claims 1 to 9,
**characterized in that** at least one carrier element (58, 60) for the, at least one, pressure sensor (48, 50, 70) consists of electrically conductive material and is passed through the first partition (38) or the partitions (38, 40) in sealed fashion.

12. Sensor arrangement according to Claim 10,
**characterized in that** the, at least one, connecting line (78) is led to a connector (62) disposed outside of the brake booster housing.

13. Sensor arrangement according to Claim 11,
**characterized in that** the, at least one, carrier element (58, 60) is led to a connector (62) disposed outside of the brake booster housing.

14. Sensor arrangement according to one of Claims 1 to 3, 5, 7 or 9 to 13,
**characterized in that** the first partition (38) is part of a housing of an electronic controller, in which an electronic printed circuit board is disposed that is connected in electrically conductive manner to the, at least one, pressure sensor (48, 50, 70).

15. Vacuum brake booster comprising a brake booster housing containing at least one vacuum chamber (54) and one working chamber (26), which is separated from the latter by a moveable wall (20) and is connectable either to vacuum or at least atmospheric pressure,
**characterized by** a sensor arrangement (10) according to one of Claims 1 to 14.

## Revendications

1. Dispositif de capteurs (10) pour un servofrein à dépression qui comporte un boîtier de servofrein comportant au moins une chambre de dépression (54) et une chambre de travail (24) séparée de celle-ci par une cloison mobile (20), et qui, de manière facultative, peut être reliée à la dépression ou au moins à la pression atmosphérique, ainsi qu'un perçage (18) réalisé dans le boîtier de servofrein, le dispositif de capteurs (10) comportant :
- une première cloison (38) qui, à l'état de montage du dispositif de capteurs, réalise l'étanchéité du boîtier de servofrein par rapport à l'atmosphère environnante,
- un boîtier (12) comportant une première partie de boîtier (13) qui s'engage dans le boîtier de servofrein et qui est divisée par une deuxième cloison (40) en un premier compartiment (44) et un second compartiment (46), cette première partie de boîtier (13) pénétrant, à l'état de montage du système de capteurs (10), dans le boîtier de servofrein sur une profondeur telle que le premier compartiment (44) est relié directement par l'intermédiaire d'un premier orifice d'entrée de pression (52) à la chambre de dépression (54) du servofrein et le second compartiment (46) est relié directement à la chambre de travail (26) du servofrein par l'intermédiaire d'un deuxième orifice d'entrée de pression (56), et
- au moins un capteur de pression (48, 50, 70) disposé dans la première partie de boîtier (13).

2. Dispositif de capteurs selon la revendication 1, **caractérisé en ce qu'**un capteur de pression (48, 50) est disposé dans chacun des deux compartiments (44, 46) de la première partie de boîtier (13).

3. Dispositif de capteurs selon la revendication 2, **caractérisé en ce que** les capteurs de pression (48, 50) sont des capteurs de pression absolue.

4. Dispositif de capteurs selon l'une quelconque des revendications précédentes, **caractérisé en ce que** la première cloison (38) et la seconde cloison (40) font partie d'un insert de boîtier (36) monobloc agencé dans la première partie du boîtier (13).

5. Dispositif de capteurs selon l'une quelconque des revendications précédentes, **caractérisé en ce que** la première partie du boîtier (13) est réalisée en forme de cylindre creux.

6. Dispositif de capteurs selon la revendication 5, **caractérisé en ce que** la première cloison (38) et la deuxième cloison (40) ont un diamètre inférieur au diamètre intérieur de la première partie du boîtier (13) et **en ce qu'**un élément d'étanchéité (47a, 47b), en particulier un joint torique, est posé entre chaque cloison (38, 40) et une paroi intérieure (42) de la première partie du boîtier (13).

7. Dispositif de capteurs selon la revendication 1, **caractérisé en ce que** seulement dans l'un des deux compartiments (44, 46) de la première partie du boîtier (13) est disposé un capteur de pression (70) conçu sous forme de capteur de pression différentielle, qui est relié au premier compartiment (44) de la première partie du boîtier (13) par l'intermédiaire d'un troisième orifice d'entrée de pression (76) et au second compartiment (46) de la première partie du boîtier (13) par l'intermédiaire d'un quatrième orifice d'entrée de pression (78).

8. Dispositif de capteurs selon la revendication 7, **caractérisé en ce que** la deuxième cloison (40) est constituée par une partie extérieure (74b) du capteur de pression différentielle (70), qui est reliée de manière étanche à une paroi intérieure (42) de la première partie du boîtier (13).

9. Dispositif de capteurs selon l'une quelconque des revendications 1 à 3 ou 5 à 8, **caractérisé en ce que** la première cloison (38) est reliée de manière étanche à une paroi intérieure (66) d'une deuxième partie du boîtier (14) située à l'extérieur du boîtier de servofrein.

10. Dispositif de capteurs selon l'une quelconque des revendications précédentes, **caractérisé en ce que** le branchement électrique dudit au moins un capteur de pression (48, 50, 70) est réalisé par l'intermédiaire d'au moins une ligne de raccordement (78) traversant de manière étanche la première cloison (38) ou les cloisons (38, 40).

11. Dispositif de capteurs selon l'une quelconque des revendications 1 à 9, **caractérisé en ce qu'**au moins un élément de support (58, 60) dudit au moins un capteur de pression (48, 50, 70) est réalisé dans un matériau électroconducteur et traverse de manière étanche la première cloison (38) ou les cloisons (38, 40).

12. Dispositif de capteurs selon la revendication 10, **caractérisé en ce que** ladite au moins une ligne de raccordement (78) est reliée à la fiche de raccordement (62) qui est disposée à l'extérieur du boîtier de servofrein.

13. Dispositif de capteurs selon la revendication 11, **caractérisé en ce que** ledit au moins un élément de support (58, 60) est relié à une fiche de raccordement (62) qui est disposée à l'extérieur du boîtier de servofrein.

14. Dispositif de capteurs selon l'une quelconque des revendications 1 à 3, 5, 7 ou 9 à 13, **caractérisé en ce que** la première cloison (38) fait partie d'un boîtier d'un dispositif de commande électronique dans lequel est disposée une platine électronique qui est reliée audit au moins un capteur de pression (48, 50, 70) par une liaison électroconductrice.

15. Servofrein à dépression comportant un boîtier de servofrein dans lequel sont disposées au moins une chambre à dépression (54) et une chambre de travail (26) séparée de celle-ci par une cloison mobile (20) et qui, de manière facultative, peut être reliée à la dépression ou au moins à la pression atmosphérique, **caractérisé par** un dispositif de capteurs (10) selon l'une quelconque des revendications 1 à 14.
